# EUROPÄISCHE PATENTSCHRIFT

(11) **EP 2 117 943 B1**
(45) Veröffentlichungstag und Bekanntmachung des Hinweises auf die Patenterteilung: **13.04.2011**
(21) Anmeldenummer: 08715468.8
(22) Anmeldetag: 12.02.2008
(51) Int. Cl.: B65D 17/50

(54) **VERPACKUNG FÜR RIESELFÄHIGE ODER FLIESSFÄHIGE PRODUKTE**
PACKAGING FOR POURABLE OR FLOWABLE PRODUCTS
EMBALLAGE POUR DES PRODUITS APTES À COULER PAR RUISSELLEMENT OU PAR ÉCOULEMENT

(30) Priorität: 12.02.2007 DE 102007007372
(43) Veröffentlichungstag der Anmeldung: 18.11.2009
(73) Patentinhaber: Xolution GmbH, 80796 München (DE)
(72) Erfinder: BRATSCH, Christian, A-5020 Salzburg (AT)
(74) Vertreter: Babeluk, Michael
(86) Internationale Anmeldenummer: PCT/DE2008/000235
(87) Internationale Veröffentlichungsnummer: WO 2008/098558

(56) Entgegenhaltungen:
- DE-A1- 19 613 246
- GB-A- 1 236 680
- GB-A- 1 389 351
- US-A- 5 443 175
- US-A1- 2004 159 665

## Beschreibung

Die Erfindung betrifft eine Verpackung für rieselfähige oder fließfähige Produkte mit einem in einer Ebene liegenden Verpackungsdeckel, der mindestens eine Öffnung aufweist, wobei die Öffnung im Verpackungsdeckel durch ein Siegelelement mit einem Siegelrahmen und einem Siegeldeckel verschließbar ist, die im verschlossenen Zustand der Verpackung etwa in der Ebene des Verpackungsdeckels liegen, wobei der Siegelrahmen und der Siegeldeckel für das Entleeren zumindest teilweise von einander an einer Sollbruchstelle trennbar sind, und der Siegelrahmen beim Entleeren mit dem Verpackungsdeckel in Verbindung bleibt, sowie eine Handhabe zum Öffnen des Siegelelementes durch Aufbrechen der Sollbruchstelle vorgesehen ist.

Bei wird auf der Deckelfläche ein Bereich so ausgestanzt und üblichen Getränkedosen mit einer Handhabe versehen, dass durch Ziehen an der Handhabe der ausgestanzte Deckelbereich entfernt werden kann. Die Dose ist hierdurch zu öffnen - ein Schließen der Dose ist mit dieser Öffnungseinrichtung jedoch nicht mehr möglich.

Außerdem gibt es wiederverschließbare Dosen mit einem Siegelelement und einem Deckel. Bei diesen Dosen ist im Verpackungsdeckel ein Kunststoffteil eingearbeitet, das die Dose verschließt und aus dem ein Siegel heraustrennbar ist, um die Dose zu öffnen. Derartige Dosen haben über diesem Kunststoffteil einen wieder verschließbaren Deckel, mit dem die Dose nach Entfernen des Siegelteils wieder verschlossen werden kann.

Die EP 1 607 341 zeigt einen Verpackungsdeckel mit einem herausnehmbaren Siegelelement und einer darüber angeordneten Verschlusseinrichtung, die es ermöglicht, den geöffneten Verpackungsdeckel wieder zu schließen, nachdem das Siegelelement entnommen wurde.

Im Hinblick auf die Vielzahl der hergestellten Dosen werden kontinuierlich neue Dosenverschlussdeckel entwickelt, weil kleinste Einsparungen oder Vorteile im Bereich des Deckels einer Dose bei einem Massenprodukt wie einer einfachen Dose bereits große Einsparungen ermöglichen.

Die GB 1 389 351 A beschreibt eine wiederverschließbare Verpackung der eingangs erwähnten Art mit den Merkmalen des Oberbegriffs des Anspruchs 1, zu deren Öffnung jedoch eine signifikante Zugkraft benötigt wird. Ähnliche Verpackungen können auch der GB 1 236 680 A, der US 2004/159 665 A1, der DE 196 13 246 A1 oder der US 5,443,175 A entnommen werden. Die Herstellung derartiger Verpackungen ist beispielsweise in der US 3,713,956 A beschrieben.

Der Erfindung liegt daher die Aufgabe zugrunde, eine Verpackung für rieselfähige oder fließfähige Produkte derart weiterzubilden, dass sie einfach herstellbar ist.

Diese Aufgabe wird bei einer Verpackung der eingangs erwähnten Art erfindungsgemäß dadurch gelöst, dass die Handhabe einen Dorn zum Aufbrechen der Sollbruchstelle aufweist.

Die Erfindung ermöglicht es, einen mit einem Siegelelement versehenen Verpackungsdeckel in einer Form herzustellen, die es erlaubt, auf aufwendige Aufbauten oberhalb des Verpackungsdeckels zu verzichten und trotzdem in der Deckelebene Siegel und Verschlussfunktionen zu vereinigen.

Je nach Ausführungsform ermöglicht die neue Verpackung ein Übereinanderstapeln von einzelnen Verpackungen, ohne dass Verschlusselemente am Verpackungsdeckel dies verhindern.

Insbesondere zur Befestigung des Siegelelementes am Verpackungsdeckel hat es sich als vorteilhaft erwiesen, wenn sich das Siegelelement zumindest teilweise in die Öffnung erstreckt.

Eine vorteilhafte Ausführungsform sieht vor, dass Siegelrahmen und Siegeldeckel einstückig mit einer Sollbruchstelle ausgebildet sind. Dies ermöglicht eine Herstellung des Siegelelementes als einziges Teil, wie beispielsweise eines Spritzgussteiles aus Kunststoff, bei dem Siegelrahmen und Siegeldeckel durch eine Sollbruchstelle auf einfache Art und Weise vor dem Entleeren der Verpackung getrennt werden. Die einstückige Ausbildung erleichtert die Herstellung und die Verbindung von Siegelelement und Verpackungsdeckel.

Um Siegelrahmen und Siegeldeckel auf einfache Art und Weise voneinander trennen zu können, wird vorgeschlagen, dass zwischen Siegelrahmen und Siegeldeckel eine Kerbe angeordnet ist. Eine andere Ausführungsform sieht vor, dass zwischen Siegelrahmen und Siegeldeckel eine Bindenaht angeordnet ist.

Je nach Einsatzzweck kann es sinnvoll sein, dass auch nach dem Öffnen der Verpackung der Siegeldeckel mit der Verpackung in Verbindung bleibt. Um dies zu ermöglichen, wird vorgeschlagen, dass zusätzlich zu einer Sollbruchstelle eine weitere Verbindung zwischen Siegelrahmen und Siegeldeckel besteht. Diese weitere Verbindungsstelle kann besonders fest ausgebildet sein, um auch nach Lösen von Siegelrahmen und Siegeldeckel im Bereich der Sollbruchstelle noch eine Verbindung zwischen Siegelrahmen und Siegeldeckel zu erhalten. Die weitere Verbindung kann jedoch auch besonders brüchig ausgebildet sein, um es zu erleichtern, an einer bestimmten Stelle den Bruch zwischen Siegelrahmen und Siegeldeckel entlang der Sollbruchstelle zu beginnen.

Aus fertigungstechnischen Gründen, und insbesondere bei einer einstückigen Herstellung von Siegelrahmen und Siegeldeckel, ist vorgesehen, Siegelrahmen und Siegeldeckel aus dem gleichen Material, insbesondere einem spritzgussfähigen Kunststoffmaterial, herzustellen. Es wird daher insbesondere vorgeschlagen, dass der Siegelrahmen im Spritzguss- oder Spritzprägeverfahren hergestellt ist.

Da Siegelrahmen, Siegeldeckel und die Handhabe jedoch unterschiedliche Anforderungen erfüllen müssen, und auch die Verbindungsbereiche zwischen diesen Teilen speziellen Anforderungen genügen sollten, wird vorgeschlagen, dass das Siegelelement aus unterschiedlichen Materialien hergestellt ist.

Moderne Spritzgusseinrichtungen erlauben die Coextrusion verschiedener Materialien zur Herstellung von Kunststoffelementen, die es erlaubt, neben der Formgebung auch durch die Materialwahl auf die Eigenschaften in speziellen Bereichen des Spritzgussteils einzuwirken. So kann beispielsweise der Siegelrahmen aus einem anderen Material hergestellt werden als der Siegeldeckel. Es können jedoch auch Übergangsbereiche, Befestigungsbereiche, wie Flansche, oder auch Bruchstellenbereiche aus einem anderen Material als die diesem Bereich umgebenden Materialien hergestellt sein. Dies erlaubt es insbesondere, plastisch verformbare und elastische Materialien miteinander zu kombinieren, um beispielsweise einen festen Siegelrahmen mit einem leichter verformbaren Siegeldeckel zu kombinieren.

Es wird daher vorgeschlagen, dass Siegelrahmen und Siegeldeckel im Mehrkomponentenspritzguss hergestellt sind. Dies ermöglicht es beispielsweise, den Siegelrahmen aus einem anderen Material als den Siegeldeckel herzustellen. Es ist jedoch auch möglich, den Übergangsbereich zwischen Siegelrahmen und Siegeldeckel aus einem anderen Material herzustellen oder weitere Komponenten, wie beispielsweise eine Handhabe oder die Verbindung zu einer Handhabe, in einem anderen Material bereit zu stellen. Außerdem ermöglicht der Mehrkomponentenspritzguss eine Auswahl verschiedener Farben für unterschiedliche Bereiche des Siegelelementes.

Es gibt eine Vielzahl an Möglichkeiten, das Siegelelement mit dem Verpackungsdeckel zu verbinden. Vorteilhaft ist es, wenn das Siegelelement zumindest einen radial nach außen abstehenden Flansch aufweist. Ein derartiger Flansch ermöglicht es, das Siegelelement mit diesem Flansch an der Innenseite des Verpackungsdeckels festzulegen oder das Siegelelement mit dem Flansch an der Außenseite des Verpackungsdeckels festzulegen.

Eine besondere Ausführungsform sieht vor, dass der Randbereich der Öffnung im Verpackungsdeckel zwischen zwei Flanschen des Siegelelementes aufgenommen ist. Dies ermöglicht eine sichere positionsgerechte Anordnung des Siegelelementes relativ zum Verpackungsdeckel.

Eine besonders vorteilhafte Ausführungsform führt zu einem wiederverschließbaren Verschluss. Hierzu ist vorgesehen, dass der Siegeldeckel derart ausgebildet ist, dass er, nachdem er aus dem Siegelrahmen entnommen wurde, als Verschlusskappe mit dem Siegelrahmen wieder verbindbar ist. Der Siegeldeckel hat somit eine erste Funktion als Siegel und ist vorzugsweise über eine Sollbruchstelle mit dem Siegelrahmen verbunden, um im Auslieferzustand der Verpackung für den Nutzer sicherzustellen, dass die Verpackung von Dritten noch nicht geöffnet wurde. Nach dem Entfernen dieses Siegels wird das Siegel nicht - wie üblich - verworfen, sondern es ist so ausgebildet, dass es mit dem Siegelrahmen als Verschlusskappe wieder verbindbar ist.

Je nach Ausbildung des Siegeldeckels und des Siegelrahmens kann der Siegeldeckel, nachdem er aus dem Siegelrahmen entnommen wurde, wieder in im Wesentlichen gleicher Position mit dem Siegelrahmen verbunden werden. Eine vorteilhafte Ausführungsvariante sieht hingegen vor, dass der Siegeldeckel derart ausgebildet ist, dass er, nachdem er aus dem Siegelrahmen entnommen wurde, mit der nach außen weisenden Innenseite mit dem Siegelrahmen wieder verbindbar ist. Der Siegeldeckel wird somit, nachdem er aus dem Siegelrahmen entnommen wurde, um die Verpackung zu öffnen, um 180° gegenüber seiner ursprünglichen Position gedreht und wieder auf die Verpackung aufgesetzt, um die Verpackung zu verschließen.

Insbesondere für dieses Wiederverschließen ist vorteilhafter Weise vorgesehen, dass der Siegeldeckel derart ausgebildet ist, dass er, nachdem er aus dem Siegelrahmen entnommen wurde, als Verschlusskappe rastend mit dem Siegelrahmen wieder verbindbar ist. Gerade die rastende Verbindung ermöglicht es, den Siegeldeckel auf einfache Art und Weise mit dem Siegelrahmen wieder zu verbinden und auch danach die Verpackung auf einfache Art und Weise öfters wieder öffnen und verschließen zu können.

Der Siegeldeckel kann mit dem Siegelrahmen über ein Gewinde oder ein Bajonett-Verschluss als Verschlusskappe verbunden werden, um leicht entfernbar und wieder aufsetzbar zu sein. Eine vorteilhafte Ausführungsform sieht vor, dass der Siegeldeckel derart ausgebildet ist, dass er, nachdem er aus dem Siegelrahmen entnommen wurde, als Verschlusskappe in einen Klemmkonus des Siegelrahmens einsetzbar ist. Hierbei kann allein der Klemmkonus zu einer ausreichenden Verbindung führen. Der Klemmkonus kann jedoch auch zusätzlich eine Rasteinrichtung aufweisen, um eine optimale Positionierung des Siegeldeckels im Siegelrahmen als Verschlusskappe zu erreichen.

Das Siegelelement kann beispielsweise mit dem Finger in die Verpackung eingedrückt werden. Vorteilhaft ist es jedoch, wenn eine Handhabe zum Öffnen des Siegelelementes vorgesehen ist. Eine derartige Handhabe kann in mannigfacher Art und Weise ausgebildet sein.

So ist es beispielsweise vorteilhaft, wenn eine Handhabe mit dem Siegelelement fest verbunden ist. Insbesondere wird sie mit dem Siegelelement einstückig ausgeführt. Vorteilhaft ist es, wenn sie am Siegeldeckel angeformt ist.

Die Handhabe weist eine Einrichtung auf, um auf die Sollbruchstelle einzuwirken. Hierzu ist der Dorn der Handhabe vorgesehen.

Um den Siegeldeckel auf einfache Art und Weise vom Siegelrahmen zu trennen und anschließend auch wieder einfach am Siegelrahmen zu befestigen, wird vorgeschlagen, dass eine zweite Handhabe auf der einer ersten Handhabe gegenüberliegenden Seite des Siegeldeckels angeordnet ist.

Insbesondere für mit Flüssigkeiten gefüllte Verpackungen wird vorgeschlagen, dass im Deckel eine zweite Öffnung vorgesehen ist, die durch ein zweites Siegelelement verschlossen ist. Dies ermöglicht es, durch die erste Öffnung die Verpackung zu leeren, während durch die zweite Öffnung Luft in die Verpackung nachfließen kann.

Vorteilhaft ist hierbei, wenn im Verpackungsdeckel die zweite Öffnung in einem im Wesentlichen der ersten Öffnung gegenüberliegenden Sektor ausgebildet ist.

Der beschriebene Verschlussmechanismus ist für unterschiedlichste Verpackungsarten geeignet. Besondere Vorteile bietet die Verschlussart jedoch an einer Dose, da sie besonders einfach an einem Dosendeckel ausgebildet werden kann, ohne dass dadurch eine wesentliche Erhöhung der Dosenhöhe eintritt.

Während für Kunststoff und Papierverbundverpackungen verschiedenartigste Verschlüsse beschrieben sind, besteht insbesondere bei Verpackungen aus Metall ein besonderes Bedürfnis nach flachen, wieder verschließbaren Verschlüssen. Daher sieht ein Ausführungsbeispiel der Erfindung vor, dass die Verpackung aus einem Metall hergestellt ist. Besondere Vorteile erschließen sich, wenn die Verpackung einen aufgebördelten Deckel aufweist, da diese Aufbördelung eine begrenzte für den Verschluss verbleibende Höhe zur Verfügung stellt, in der nur spezielle Verschlusstypen anordenbar sind.

Die Ausbildung des Verschlusses erschließt ein breites Anwendungsgebiet für derartige Verpackungen. Die Art des Verschlusses ermöglicht es, die Verpackung mit kohlesäurehaltigen Flüssigkeiten zu füllen, die einen gewissen Innendruck aufbauen, dem der Verschluss widerstehen muss. Daher ist der Verschluss neben einer Vielzahl an weiteren Anwendungsmöglichkeiten für mit einer Limonade oder Bier gefüllte Verpackungen prädestiniert.

Mehrere Beispiele sind in der Zeichnung beschrieben Dies sind nur unterschiedliche Formen, die zeigen, wie Verschlüsse umgesetzt werden können, wobei es sich hierbei mehrheitlich nur um Ausführungsbeispiele handelt, die dem Fachmann Anregungen zu konkreten weiteren Ausführungsformen geben. Es zeigen:
- Fig. 1: schematisch eine Draufsicht auf eine Dose;
- Fig. 2: schematisch einen Schnitt durch die in Figur 1 gezeigte Dose längs der Linie II-II;
- Fig. 3: schematisch einen Schnitt durch einen Verschluss mit innen liegendem Flansch;
- Fig. 4: schematisch einen Schnitt durch einen Verschluss mit außen liegendem Flansch;
- Fig. 5: schematisch einen Schnitt durch einen Verschluss mit innen und außen liegendem Flansch;
- Fig. 6: schematisch einen Schnitt durch einen Verschluss mit angehobener Handhabe;
- Fig. 7: schematisch einen Schnitt durch einen Verschluss mit angehobener Handhabe und abgehobenem Siegeldeckel;
- Fig. 8: schematisch einen Schnitt durch einen Verschluss mit entferntem Siegeldeckel;
- Fig.9: schematisch einen Schnitt durch einen Verschluss mit drehbar angelenkter Handhabe;
- Fig. 10: schematisch einen Schnitt durch einen Verschluss mit angelenkter Handhabe und Hebelnase;
- Fig. 11: schematisch einen Schnitt durch einen erfindungsgemäßen Verschluss mit angelenkter Handhabe und Dorn in einer ersten Position;
- Fig. 12: schematisch einen Schnitt durch den in Fig. 11 gezeigten Verschluss mit der Handhabe in einer zweiten Position;
- Fig. 13: schematisch einen Schnitt durch einen Verschluss mit einhängbarer Handhabe in geschlossener Position;
- Fig. 14: schematisch den in Fig. 13 gezeigten Verschluss in geöffneter Position;
- Fig. 15: schematisch den in Fig. 14 gezeigten Verschluss in am Bördelrand einer Verpackung angehakter Position;
- Fig. 16: schematisch einen Schnitt durch einen Verschluss mit einrastbarem Deckel;
- Fig. 17: schematisch den in Fig. 16 gezeigten Verschluss mit angehobener Handhabe;
- Fig. 18: schematisch den in Fig. 16 gezeigten Verschluss in leicht geöffneter Position;
- Fig. 19: schematisch den in Fig. 16 gezeigten Verschluss mit aufgeklipstem Deckel; und
- Fig. 20: schematisch einen Schnitt durch einen Verschluss mit Ausguss.

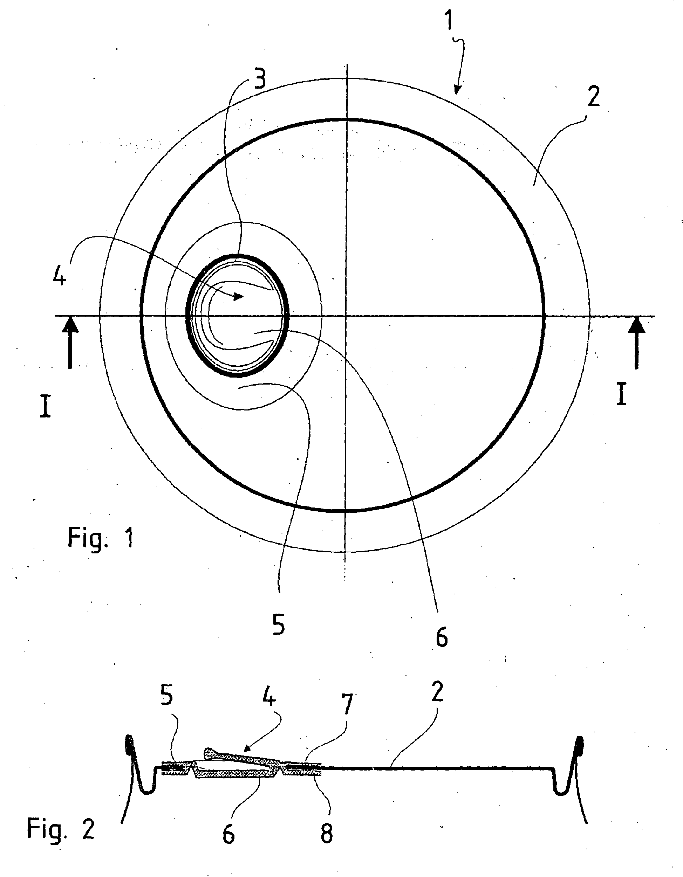

Die Fig. 1 zeigt eine Verpackung 1 in einer Draufsicht auf den Verpackungsdeckel 2 mit einer dezentral angeordneten Öffnung 3, die durch ein Siegelelement 4 verschlossen ist. Dieses Siegelelement 4 besteht im Wesentlichen aus einem Siegelrahmen 5 und einem Siegeldeckel 6, die etwa in der Ebene des Verpackungsdeckels 2 liegen.

Der in Fig. 2 gezeigte Schnitt zeigt, wie das Siegelelement 4 am Dosendeckel 2 mit einem oberen Flansch 7 und einem unteren Flansch 8 befestigt ist. Die Flansche 7 und 8 bilden im Wesentlichen den Siegelrahmen 5, der den Siegeldeckel 6 hält.

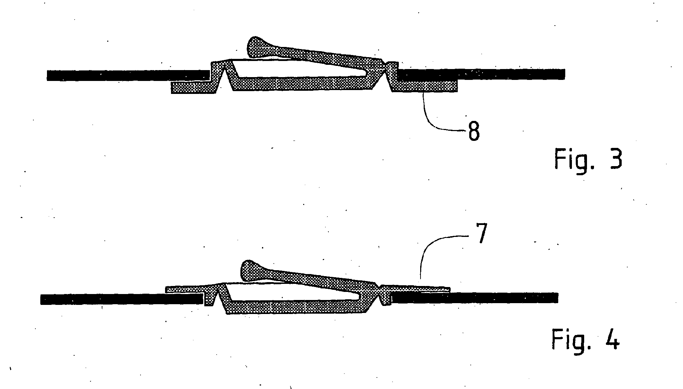

Die Fig. 3 und Fig. 4 zeigen jeweils ein Siegelelement, bei dem nur ein unterer Flansch 8 bzw. nur ein oberer Flansch 7 vorgesehen ist.

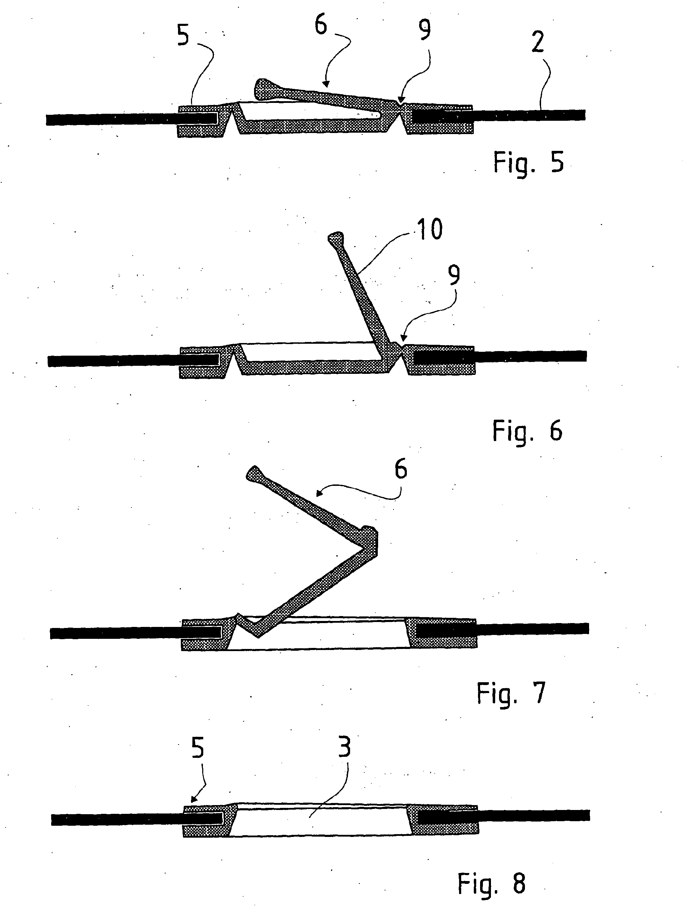

Die Fig. 5 bis Fig. 8 zeigen das Öffnen einer Verpackung im Bereich ihres Deckels 2 durch Lösen eines Siegeldeckels 6 aus einem Siegelrahmen 5 Hierzu ist der

Siegeldeckel 6 über eine Sollbruchstelle 9 mit dem Siegelrahmen 5 verbunden. Beim Anheben einer Handhabe 10 entsteht eine Scherkraft, die an einer ersten Stelle die Verbindung zwischen Siegelrahmen und Siegeldeckel im Bereich der Sollbruchstelle bricht. Ein weiteres Ziehen an der Handhabe 10 führt, wie in Fig. 7 gezeigt, zum Ablösen des Siegeldeckels vom Siegelrahmen und damit zur Öffnung der Verpackung. Der Siegeldeckel 6 kann am Siegelrahmen bleiben, während die Verpackung geleert wird. Alternativ dazu kann der Siegeldeckel, wie in Fig. 8 gezeigt, vollständig vom Siegelrahmen 5 entfernt werden, um die Öffnung 3 vollständig freizugeben.

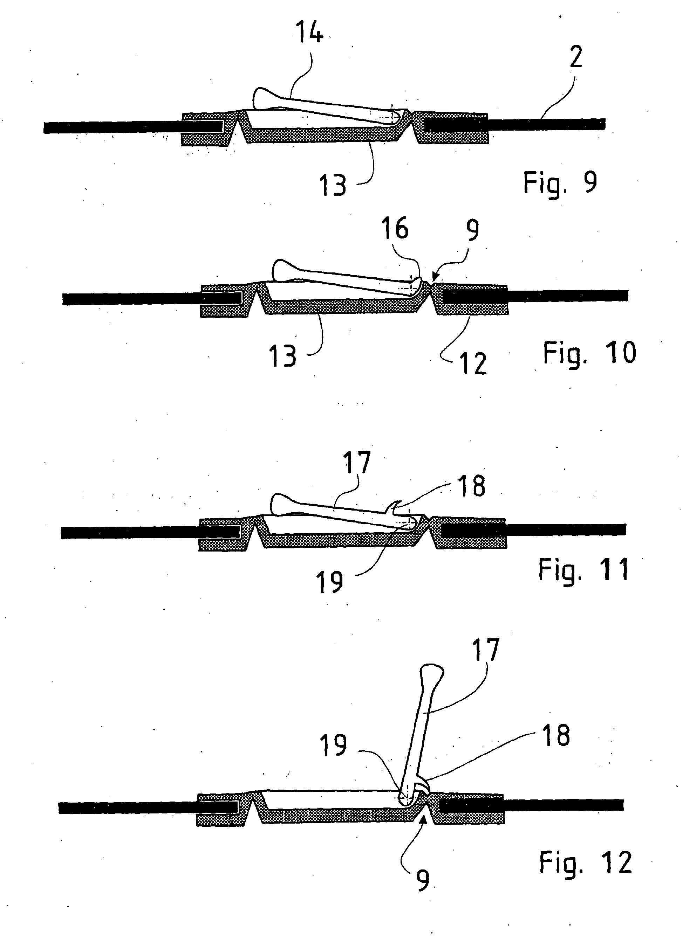

Die Fig. 9 zeigt einen Verpackungsdeckel 2 mit einem Siegelelement 11, das einen Siegelrahmen 12 und einen Siegeldeckel 13 aufweist. Am Siegeldeckel 13 ist eine Handhabe 14 aus einem anderen Material angelenkt, die dazu dient, den Siegeldeckel 13 vom Siegelrahmen 12 zu lösen.

Um dieses Lösen des Siegeldeckels 13 vom Siegelrahmen 12 zu erleichtern, hat die in Fig. 10 gezeigte Handhabe 15 eine Nase 16. Beim Anheben der Handhabe 15 wird die Nase 16 in Richtung auf die Sollbruchstelle 9 gedrückt, um die Verbindung zwischen Siegeldeckel 13 und Siegelrahmen 12 an dieser Stelle einfacher aufzubrechen.

Die in den Fig. 11 und Fig. 12 gezeigte erfindungsgemäße Ausführungsform sieht an einer Handhabe 17 einen Dorn 18 vor. Bei einer Drehung der Handhabe 17 um den Drehpunkt gelangt der Dorn 18 in Eingriff mit der Sollbruchstelle 9, um diese durch Druck an der Handhabe 17 und damit ein Pressen des Dorns 18 in die Sollbruchstelle 9 aufzubrechen.

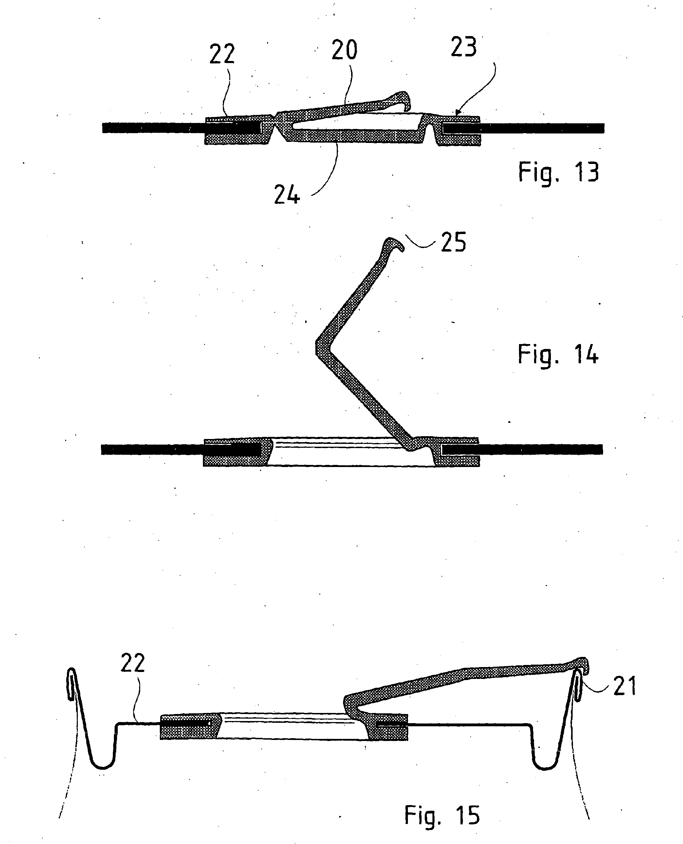

Insbesondere wenn der Siegeldeckel nicht verworfen werden soll, hängt dieser möglicherweise störend am Siegelrahmen. Daher zeigen die Fig. 13 bis Fig. 15 eine Ausführungsform eines Verschlusses, bei der die Handhabe 20 am Bördelrand 21 eines Verpackungsdeckels 22 rastend einhängbar ist. Hierzu ist ein Siegelrahmen 23 am Dosendeckel 22 befestigt, während innerhalb des Siegelrahmens 23 ein Siegeldeckel 24 aufgenommen ist. An einer Seite des Siegeldeckels 24 ist die Handhabe 20 angeordnet, die zusammen mit dem Siegeldeckel derart gestreckt werden kann, dass sie mit einem hakenförmigen Ende 25 am Bördelrand 21 des Dosendeckels 22 einhängbar ist.

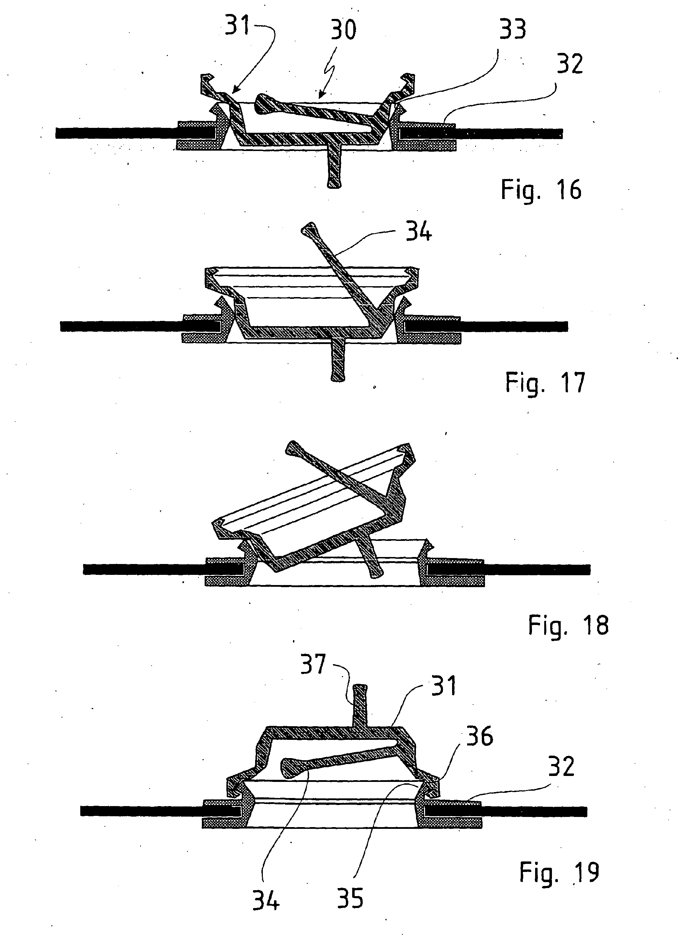

Eine besonders leicht verschließbare Verpackung ermöglicht der in den Fig. 16 bis 19 gezeigte Verschluss 30, bei dem wiederum ein Siegeldeckel 31 in einem Siegelrahmen 32 angeordnet ist. Der Siegelrahmen hat eine leicht konisch geöffnete Öffnung 33, in der der Siegeldeckel 31 zunächst festgehalten ist. Durch eine Verbindung zwischen Siegelrahmen 32 und Siegeldeckel 31 ist ein dichter Verschluss einer Verpackung gewährleistet.

Der Siegeldeckel 31 hat eine Handhabe 34, durch deren Anheben zunächst die Verbindung zwischen Siegeldeckel 31 und Siegelrahmen 32 reißt, so dass durch Zug mittels der Handhabe 34 am Siegeldeckel 31 der Siegeldeckel 31 vom Siegelrahmen 32 gelöst werden kann. Das Anheben der Handhabe 34 und das Lösen des Siegeldeckels 31 vom Siegelrahmen 32 ist in den Fig. 17 und Fig. 18 gezeigt.

Sowie der gesamte Siegeldeckel 31 vom Siegelrahmen 32 gelöst ist, kann dieser Siegeldeckel 31 in umgekehrter Ausrichtung auf dem Siegelrahmen 32 befestigt werden. Hierzu ist am Siegelrahmen 32 eine umlaufende Nase 35 vorgesehen, die eine Hinterschneidung bildet, in die eine am Siegeldeckel vorgesehene umlaufende Nase 36 eingreifen kann. Der Siegel 31 kann dadurch in umgedrehter Position wieder auf den Siegelrahmen 32 aufgepresst werden, wobei die am Rand umlaufende Nase 36 den Siegeldeckel 31 rastend an der Nase 35 mit dem Siegelrahmen 32 verbindet.

Die Handhabe 34 gerät hierbei an die Innenseite der Verpackung und zum besseren Greifen des Siegeldeckels 31 ist eine zusätzliche Handhabe 37 an der der ersten Handhabe 34 gegenüberliegenden Seite des Siegeldeckels 31 angeordnet.

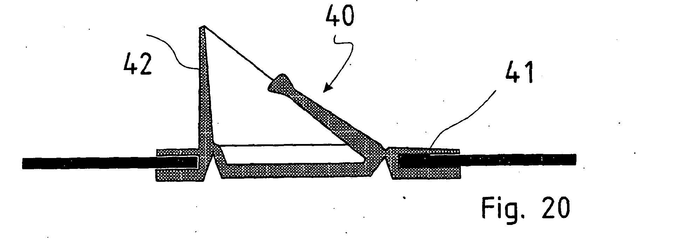

Das in Fig. 20 gezeigte Ausführungsbeispiel ist ähnlich wie das in Fig. 2 gezeigte Ausführungsbeispiel aufgebaut. Bei diesem Verschluss 40 ist jedoch am Siegelrahmen 41 ein Ausguss 42 vorgesehen, der in der Fig. nur schematisch angedeutet ist.

## Patentansprüche

1. Verpackung (1) für rieselfähige oder fließfähige Produkte mit einem in einer Ebene liegenden Verpackungsdeckel (2), der mindestens eine Öffnung (3) aufweist, wobei die Öffnung (3) im Verpackungsdeckel (2) durch ein Siegelelement (4) mit einem Siegelrahmen (5) und einem Siegeldeckel (6) verschließbar ist, die im verschlossenen Zustand der Verpackung (1) etwa in der Ebene des Verpackungsdeckels (2) liegen, wobei der Siegelrahmen (5) und der Siegeldeckel (6) für das Entleeren zumindest teilweise von einander an einer Sollbruchstelle (9) trennbar sind, und der Siegelrahmen (5) beim Entleeren mit dem Verpackungsdeckel (2) in Verbindung bleibt, sowie eine Handhabe (17) zum Öffnen des Siegelelementes (4) durch Aufbrechen der Sollbruchstelle (9) vorgesehen ist, **dadurch gekennzeichnet, dass** die Handhabe (10) einen Dorn (18) zum Aufbrechen der Sollbruchstelle (9) aufweist.

2. Verpackung (1) nach Anspruch 1, **dadurch gekennzeichnet, dass** der Dorn (18) der Handhabe (17) derart angeordnet ist, dass er bei einer Drehung der Handhabe (17) um einen Drehpunkt mit der Sollbruchstelle (9) in Eingriff gelangt, um diese durch Druck an der Handhabe (17) und damit ein Pressen des Dorns (18) in die Sollbruchstelle (9) aufzubrechen.

3. Verpackung (1) nach Anspruch 1 oder 2, **dadurch gekennzeichnet, dass** die Handhabe (17) einen Hebel oder Exzenter bildet, um den Bruch an der Sollbruchstelle (9) zu erleichtern.

4. Verpackung (1) nach einem der Ansprüche 1 bis 3, **dadurch gekennzeichnet, dass** Siegelrahmen (5) und Siegeldeckel (6) einstückig mit der Sollbruchstelle (9) ausgebildet sind.

5. Verpackung (1) nach einem der Ansprüche 1 bis 4, **dadurch gekennzeichnet, dass** zwischen Siegelrahmen (5) und Siegeldeckel (6) eine Kerbe oder eine Bindenaht angeordnet ist.

6. Verpackung (1) nach einem der Ansprüche 1 bis 5, **dadurch gekennzeichnet, dass** die Handhabe (17) mit dem Siegelelement (4) fest verbunden ist.

7. Verpackung (1) nach einem der Ansprüche 1 bis 6, **dadurch gekennzeichnet, dass** die Handhabe (17) als Ausformung einer Verschlusskappe ausgebildet ist, die rastend mit dem Siegelrahmen (5) verbindbar ist.

8. Verpackung (1) nach einem der Ansprüche 1 bis 7, **dadurch gekennzeichnet, dass** zusätzlich zu der Sollbruchstelle (9) eine weitere Verbindung zwischen Siegelrahmen (5) und Siegeldeckel (6) besteht.

9. Verpackung (1) nach einem der Ansprüche 1 bis 8, **dadurch gekennzeichnet, dass** der Siegeldeckel (6) derart ausgebildet ist, dass er, nachdem er aus dem Siegelrahmen (5) entnommen wurde, als Verschlusskappe mit dem Siegelrahmen (5) wieder verbindbar ist.

10. Verpackung (1) nach einem der Ansprüche 1 bis 9, **dadurch gekennzeichnet, dass** der Siegeldeckel (6) derart ausgebildet ist, dass er, nachdem er aus dem Siegelrahmen (5) entnommen wurde, mit nach außen weisender Innenseite mit dem Siegelrahmen (5) wieder verbindbar ist.

11. Verpackung (1) nach einem der Ansprüche 1 bis 10, **dadurch gekennzeichnet, dass** der Siegeldeckel (6) derart ausgebildet ist, dass er, nachdem er aus dem Siegelrahmen (5) entnommen wurde, als Verschlusskappe rastend mit dem Siegelrahmen (5) oder in einen Klemmkonus des Siegelrahmens (5) einsetzbar wieder verbindbar ist.

12. Verpackung (1) nach einem der Ansprüche 1 bis 11, **dadurch gekennzeichnet, dass** eine zweite Handhabe (37) auf der einer ersten an der Außenseite der Verpackung (1) liegende Handhabe (34) gegenüber an der Innenseite der Verpackung (1) liegenden Seite des Siegeldeckels (30) angeordnet ist.

13. Verpackung (1) nach einem der Ansprüche 1 bis 12, **dadurch gekennzeichnet, dass** im Deckel (2) eine zweite Öffnung vorgesehen ist, die durch ein zweites Siegelelement verschlossen ist.

14. Verpackung (1) nach einem der Ansprüche 1 bis 13, **dadurch gekennzeichnet, dass** der Randbereich der Öffnung (3) im Verpackungsdeckel (2) zwischen zwei Flanschen (7, 8) des Siegelelementes (4) aufgenommen ist.

## Claims

1. A package (1) for pourable or fluid products, comprising a package cover (2) disposed in a plane and comprising at least one opening (3), with the opening (3) in the package cover (2) being sealable by a sealing element (4) having a sealing frame (5) and a sealing cover (6) which in the sealed state of the package (1) lie approximately in the plane of the package cover (2), the sealing frame (5) and the sealing cover (6) being severable at least partly from one another at a predetermined breaking point (9) for the purpose of emptying the package, and the sealing frame (5) remaining in connection with the package cover (2) during the emptying, and a handle (17) for opening the sealing element (4) by breaking up the predetermined breaking point (9), **characterised in that** the handle (10) comprises a pin (18) for breaking up the predetermined breaking point (9).

2. A package (1) according to claim 1, **characterised in that** the pin (18) of the handle (17) is arranged in such a way that it comes into engagement with the predetermined breaking point (9) during a rotation of the handle (17) about a pivot point in order to break said predetermined breaking point by pressure on the handle (17) and thus pressing of the pin (18) into the predetermined breaking point (9).

3. A package (1) according to claim 1 or 2, **characterised in that** the handle (17) forms a lever or an eccentric in order to facilitate the breaking at the predetermined breaking point (9).

4. A package (1) according to one of the claims 1 to 3, **characterised in that** the sealing frame (5) and the sealing cover (6) are arranged integrally with the predetermined breaking point (9).

5. A package (1) according to one of the claims 1 to 4, **characterised in that** a notch or a joint line is arranged between the sealing frame (5) and the sealing cover (6).

6. A package (1) according to one of the claims 1 to 5, **characterised in that** the handle (17) is rigidly connected with the sealing element (4).

7. A package (1) according to one of the claims 1 to 6, **characterised in that** the handle (17) is arranged as a formation of a sealing cap which can be connected with the sealing frame (5) in a lockable manner.

8. A package (1) according to one of the claims 1 to 7, **characterised in that** there is a further connection between the sealing frame (5) and the sealing cover (6) in addition to the predetermined breaking point (9).

9. A package (1) according to one of the claims 1 to 8, **characterised in that** the sealing cover (6) is arranged in such a way that once it is taken from the sealing frame (5) it is connectable again with the sealing frame (5) as a sealing cap.

10. A package (1) according to one of the claims 1 to 9, **characterised in that** the sealing cover (6) is arranged in such a way that once it is taken from the sealing frame (5) it is connectable again with the sealing frame (5) with its inside facing to the outside.

11. A package (1) according to one of the claims 1 to 10, **characterised in that** the sealing cover (6) is arranged in such a way that once it is taken from the sealing frame (5) it is connectable again as a sealing cap in a locking manner with the sealing frame (5) or in a clamping cone of the sealing frame (5).

12. A package (1) according to one of the claims 1 to 11, **characterised in that** a second handle (37) is arranged on a side of the sealing cover (30) which is disposed on the inside of the package (1) arranged opposite of a first handle (34) disposed on the outside of the package (1).

13. A package (1) according to one of the claims 1 to 12, **characterised in that** a second opening is provided in the cover (2), which opening is sealed by a second sealing element.

14. A package (1) according to one of the claims 1 to 13, **characterised in that** the boundary area of the opening (3) is accommodated in the package cover (2) between two flanges (7, 8) of the sealing element (4).

## Revendications

1. Emballage (1) pour des produits susceptibles de ruisseler ou de couler comportant un couvercle d'emballage (2) dans un plan ayant au moins une ouverture (3),
- l'ouverture (3) du couvercle d'emballage (2) étant fermée par un élément de scellement (4) comportant un cadre de scellement (5) et un couvercle de scellement (6) situé sensiblement dans le plan du couvercle d'emballage (2) à l'état fermé de l'emballage (1),
- le cadre de scellement (5) et le couvercle de scellement (6) pouvant être séparés au moins partiellement l'un de l'autre au niveau d'un point de rupture de consigne (9) pour vider les produits et le cadre de scellement (5) restant relié au couvercle d'emballage (2) pour vider, ainsi qu'une poignée (17) pour ouvrir l'élément de scellement (4) en rompant le point de rupture de consigne (9),
emballage **caractérisé en ce que**
la poignée (10) comporte une broche (18) pour rompre le point de rupture de consigne (9).

2. Emballage (1) selon la revendication 1,
**caractérisé en ce que**
la broche (18) de la poignée (17) est disposée pour que si l'on tourne la poignée (17) autour d'un point de rotation, elle arrive en prise avec le point de rupture de consigne (9) pour le rompre par la poussée sur la poignée (17) et ainsi enfoncer la broche (18).

3. Emballage (1) selon la revendication 1 ou 2,
**caractérisé en ce que**
la poignée (17) forme un levier ou un excentrique pour faciliter la rupture au niveau du point de rupture de consigne (9).

4. Emballage (1) selon l'une des revendications 1 à 3,
**caractérisé en ce que**
le cadre de scellement (5) et le couvercle de scellement (6) sont réalisés en une seule pièce avec le point de rupture de consigne (9).

5. Emballage (1) selon l'une des revendications 1 à 4,
**caractérisé par**
une encoche ou un cordon de liaison entre le cadre de scellement (5) et le couvercle de scellement (6).

6. Emballage (1) selon l'une des revendications 1 à 5,
**caractérisé en ce que**
la poignée (17) est reliée solidairement à l'élément de scellement (4).

7. Emballage (1) selon l'une des revendications 1 à 6,
**caractérisé en ce que**
la poignée (17) formée sur le volet de fermeture est reliée par enclipage au cadre de scellement (5).

8. Emballage (1) selon l'une des revendications 1 à 7,
**caractérisé par**
une autre liaison entre le cadre de scellement (5) et le couvercle de scellement (6) en plus du point de rupture de consigne (9).

9. Emballage (1) selon l'une des revendications 1 à 8,
**caractérisé en ce qu'**
après son dégagement hors du cadre de scellement (5), le couvercle de scellement (6) peut de nouveau être relié au cadre de scellement (5) comme capuchon de fermeture.

10. Emballage (1) selon l'une des revendications 1 à 9,
**caractérisé en ce que**
le couvercle de scellement (6) est réalisé pour qu'après son enlèvement du cadre de scellement (5), il puisse de nouveau être relié au cadre de scellement (5) par son côté tourné vers l'intérieur.

11. Emballage (1) selon l'une des revendications 1 à 10,
**caractérisé en ce que**
le couvercle de scellement (6) est réalisé pour qu'après avoir été enlevé du cadre de scellement (5), il puisse être enclipé comme capuchon de fermeture sur le cadre de scellement (5) ou être engagé dans le cadre de scellement (5) comme un cône de serrage.

12. Emballage (1) selon l'une des revendications 1 à 11,
**caractérisé par**
le côté extérieur de l'emballage (1) comporte une seconde poignée (37) sur le côté du couvercle de scellement (30) tourné vers l'intérieur de l'emballage (1), à l'opposé de la première poignée (34).

13. Emballage (1) selon l'une des revendications 1 à 12,
**caractérisé en ce que**
le couvercle (2) comporte une seconde ouverture fermée par un second élément de scellement.

14. Emballage (1) selon l'une des revendications 1 à 13,
**caractérisé en ce que**
la zone de bord de l'ouverture (3) est reçue dans le couvercle d'emballage (2) entre deux brides (7, 8) de l'élément de scellement (4).
